# EUROPÄISCHE PATENTSCHRIFT

(11) **EP 2 866 945 B1**
(45) Veröffentlichungstag und Bekanntmachung des Hinweises auf die Patenterteilung: **28.03.2018**
(21) Anmeldenummer: 13732135.2
(22) Anmeldetag: 26.06.2013
(51) Int. Cl.: B04B 1/20, B04B 11/02, B04B 13/00, C22B 3/00, B01D 11/04

(54) **VERFAHREN ZUR AUFARBEITUNG EINER BEI DER HYDROMETALLURGISCHEN GEWINNUNG EINES METALLS GEBILDETEN EMULSION**
METHOD FOR REPROCESSING AN EMULSION FORMED DURING HYDROMETALLURGICAL RECOVERY OF A METAL
PROCÉDÉ DE TRAITEMENT D'UNE ÉMULSION FORMÉE LORS DE L'EXTRACTION HYDROMÉTALLURGIQUE D'UN MÉTAL

(30) Priorität: 02.07.2012 DE 102012105828
(43) Veröffentlichungstag der Anmeldung: 06.05.2015
(73) Patentinhaber: GEA Mechanical Equipment GmbH, 59302 Oelde (DE)
(72) Erfinder: HORBACH, Ulrich, 59071 Hamm (DE); KRAMER, Jens, 59302 Oelde (DE); HARTMANN, Tore, 59302 Oelde (DE)
(74) Vertreter: Specht, Peter
(86) Internationale Anmeldenummer: PCT/EP2013/063331
(87) Internationale Veröffentlichungsnummer: WO 2014/005889

(56) Entgegenhaltungen:
- WO-A1-2006/133804
- DE-A1-102008 051 499
- JP-A- H08 229 434
- US-A- 6 143 183

## Beschreibung

Die Erfindung betrifft ein Verfahren zur Aufarbeitung einer bei der hydrometallurgischen Gewinnung eines Metalls gebildeten Emulsion nach dem Oberbegriff des Anspruchs 1.

Bei der hydrometallurgischen Gewinnung von Metallen wird in einem Schritt der Lösungsmittelextraktion eine feststoffhaltige Emulsion an der Phasengrenzfläche zwischen der organischen Phase und der wässrigen Phase ausgebildet. Diese feststoffhaltige Emulsion beeinflusst die Effizienz des hydrometallurgischen Gewinnungsverfahrens, da die Emulsion gegenüber der organischen und der wässrigen Phase einen relativ großen Anteil bildet, welcher sich nur schwer durch herkömmliche Sedimentation in den dafür vorgesehenen Sedimentationstanks abtrennen lässt. Die Verunreinigungen der Emulsion werden sowohl in die organische Phase als auch im späteren Verlauf bis in die Elektrolytlösung weitergeschleppt, so dass die Lebenszeit der Kathode bei der elektrochemischen Gewinnung des Metalls verringert wird und so dass die Einstellung des pH-Wertes der Elektrolytlösung problematisch wird. Die Verunreinigungen finden sich ebenso in der wässrigen Phase der Lösungsmittelextraktion wieder, so dass diese Phase nicht ohne Weiteres wieder als Auslauglösung rückgewonnen werden kann.

Die gattungsgemäße WO 2006/133804 offenbart die Verwendung eines Dekanters zur Drei-Phasentrennung einer Emulsion bei der hydrometallurgischen Gewinnung eines Metalls. Zur Einstellung der Trennzone und/oder der Teichtiefe in der Trommel wird in einer Ringkammer, in welcher eine Schälscheibe angeordnet ist, der Druck geändert. In die Ringkammer mündet eine Fluidzuleitung, durch die von außen ein Fluid, z.B. ein Gas eingeleitet werden kann. Diese Art der Einstellung/Regelung der Trennzone und/oder der Teichtiefe hat sich zwar an sich bewährt, sie soll aber weiter optimiert werden.

Aus der JP 2 672605 B2 ist es bekannt, bei einer Schlammklärung in einem Zweiphasendekanter die Trübung der Schlamm- bzw. Feststoffphase und die Trübung der Flüssigkeitsphase zu überwachen und als Regelgröße einzusetzen. Es ist ausgehend von der gattungsgemäßen WO 2006/133804 die Aufgabe der vorliegenden Erfindung, ein verbessertes Verfahren zur Aufarbeitung einer bei der hydrometallurgischen Gewinnung gebildeten Emulsion bereitzustellen.

Die Erfindung löst diese Aufgabe durch die Merkmale des Anspruchs 1.

Die Verstellung der Trennzone in Abhängigkeit von der Dichte der ersten flüssigen Phase erfolgt derart bzw. hat zur Folge, dass die Verweilzeit dieser Phase im Dekanter optimiert wird, so dass die Phase gut von Feststoffen gereinigt abgeleitet wird.

Dadurch kann die erste flüssige Phase stets in den hydrometallurgischen Prozess als Lösungsmittel für die Lösungsmittelextraktion zurückgeführt werden. Gleichzeitig kann auch die zweite flüssige Phase mit lediglich geringen Feststoff-Verschmutzungen aus dem Dekanter abgeführt werden und ggf. als Auslauglösung in den hydrometallurgischen Prozess rückgeführt werden. Bei höheren Metallionenkonzentrationen kann die erste flüssige Phase, vorzugsweise als organische Phase, auch der Rückextraktion zugeführt werden, um eine Maximierung der Ausbeute an Metall bei der hydrometallurgischen Gewinnung zu erreichen. In beiden Fällen wird die Effizienz des hydrometallurgischen Verfahrens gesteigert. Darüber hinaus können die im hydrometallurgischen Prozess verwendeten Lösungsmittel in größerem Umfang zurückgewonnen werden.

Dabei erfolgt eine Phasentrennung unter Bildung einer ersten flüssigen Phase, einer zweiten flüssigen Phase und einer Feststoffphase. Vorzugsweise erfolgt eine Einstellung des Ablaufdruckes in der Ablaufleitung einer Schälscheibe zum Ablauf der ersten Phase. Hierzu wird die Dichte der ersten flüssigen Phase als Istwert bestimmt und mit wenigstens einem Sollwert verglichen. Weicht der Istwert vom Sollwert ab, wird der Ablaufdruck der ersten flüssigen Phase verändert.

Vorzugsweise wird die Regelung derart gestaltet, dass das System nach dem Minimum der Dichte den zugehörigen Druck regelt.

Vorteilhafte Ausgestaltungen der Erfindung sind Gegenstand der Unteransprüche

Bei einer zu abrupten Erhöhung des Auslaufdruckes könnte es dazu kommen, dass ein Teil der organischen Phase mit der wässrigen Phase aus dem Dekanter ausgetragen wird. Um dies zu vermeiden, ist es von Vorteil, wenn eine zusätzliche Prozessgröße ermittelt wird und auf einen vorgegebenen Sollwert eingestellt wird. Dies kann beispielsweise durch die Ermittlung der Ausbeute, der Leitfähigkeit und/oder des Reinheitsgrades der organischen Phase und/oder der wässrigen Phase erfolgen.

Geeignet ist das vorstehend beschriebene Verfahren auch als Teil eines Verfahrens zur hydrometallurgischen Gewinnung eines Metalls, das vorzugsweise die folgenden Schritte aufweist:
A) Bereitstellen eines Metallerzes;
B) Auslaugen des Metallerzes unter Bildung einer metallionenhaltigen wässrigen Lösung oder Aufschlämmung;
C) Lösungsmittelextraktion zur Überführung von Metallionen in eine organische Lösungsmittelphase;
D) Rückextraktion der Metallionen unter Zugabe einer Elektrolytlösung zur organischen Lösungsmittelphase; und
E) Elektrochemische Gewinnung des Metalls;

Dabei wird während der Lösungsmittelextraktion eine feststoffhaltige Emulsion gebildet, dessen Aufarbeitung nach einem der vorhergehenden Verfahren erfolgt. Durch die Aufarbeitung der Emulsion wird die Effizienz der hydrometallurgischen Gewinnung verbessert. Fluktuationen die durch die inhomogene Zusammensetzung des Metallerzes, insbesondere durch einen wechselnden Anteil an Silikaten bzw. Sand hervorgerufen werden, beeinflussen die Effizienz der hydrometallurgischen Gewinnung nur im geringen Maße.

Vorteilhafte Ausgestaltungen der Erfindung sind Gegenstand der Unteransprüche.

Dabei ist es für eine effiziente Arbeitsweise insbesondere von Vorteil, dass die aus der Emulsion zurückgewonnenen flüssigen Phasen wieder als organisches Lösungsmittel oder Auslaugflüssigkeit im Extraktionsprozess rückgeführt werden können, so dass eine umweltfreundliche und sparsame Arbeitsweise ermöglicht wird.

Eine vorteilhafte Variante der Erfindung wird nachfolgend anhand der Zeichnungen näher erläutert.

### Sie zeigen:

- Figur 1:: eine schematische Darstellung eines hydrometallurgischen Verfahrens zur Gewinnung eines Metalls;
- Figur 2:: eine schematische Darstellung eines Teilbereichs eines Dekanters zur Aufarbeitung einer Emulsion;
- Figur 3:: eine schematische Darstellung einer Betriebszustandes mit einem relativ niedrigen Ablaufdruck in der einer Schälscheibe nachgeschalteten Ablaufleitung des Dekanters;
- Figur 4:: eine schematische Darstellung eines Betriebszustands mit im Vergleich zu Fig. 3 erhöhten Ablaufdruck;
- Figur 5 - 7: verschiedene Diagramme zur Veranschaulichung der gegebenen Zusammenhänge bei der Verarbeitung der Emulsion.

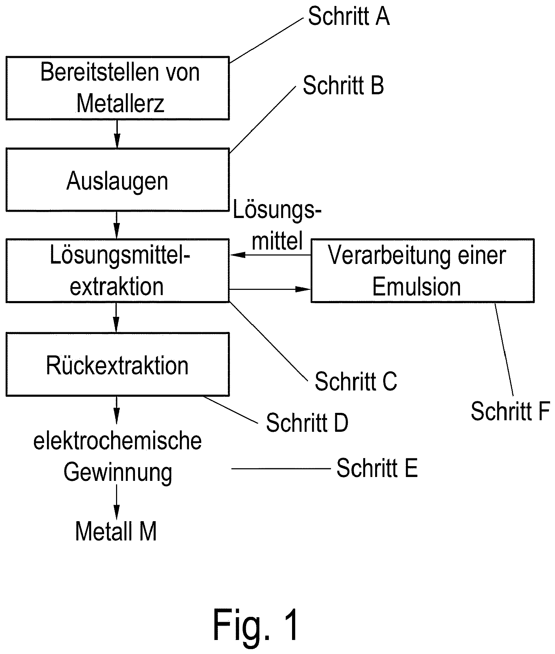

Figur 1 zeigt einen beispielhaften Verfahrensablauf zur hydrometallurgischen Gewinnung eines Metalls.

Ausgehend vom Bereitstellen eines Metalle2es in Schritt A, beispielsweise einem kupfer-, nickel- oder kobalthaltigem Erz, erfolgt zunächst in Schritt B ein Auslaugen des Metallerzes. Dabei wird eine Auslauglösung zugegeben. Dadurch werden Metallionen zumindest teilweise gelöst. Bei der Auslauglösung handelt es sich vorzugsweise um eine wässrige Lösung.

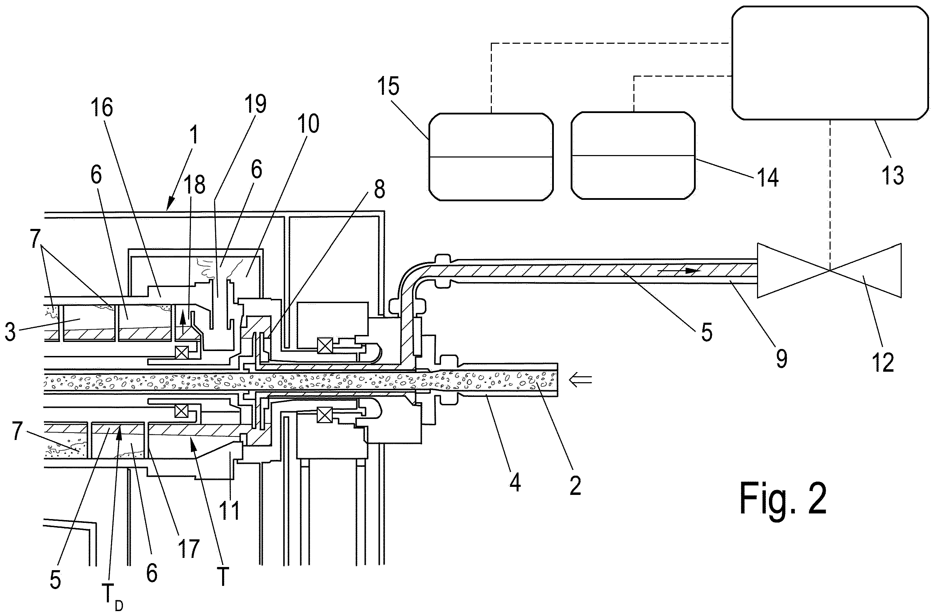

Nach dem Auslaugen erfolgt in Schritt C eine Lösungsmittelextraktion. Dabei wird vorzugsweise ein organisches Lösungsmittel zu der Auslauglösung hinzugegeben unter Bildung eines Zweiphasen-Systems mit einer organischen Phase und einer wässrigen Phase in welcher sich jedoch aufgrund von Verunreinigungen an der Phasengrenze eine feststoffhaltige Emulsion bildet. Die Aufarbeitung wird im Anschluss in den Figuren 2-7 näher beschrieben.

Nach der Überführung der Metallionen in die organische Phase erfolgt in Schritt D eine Rückextraktion durch Zugabe einer wässrigen Elektrolytlösung, wobei die organische Phase zurückgewonnen werden kann, um so wieder in der vorhergehenden Lösungsmittelextraktion eingesetzt zu werden.

Nach der Lösungsmittelextraktion und der Rückextraktion erfolgt in Schritt E die elektrochemische Gewinnung und ggf. eine zusätzliche Raffination des Metalls M, in Abhängigkeit von dem Abscheidungspotential des jeweiligen Metalls.

Figur 2 verdeutlicht einen vorteilhaften Weg zur Aufarbeitung der Emulsion, welche bei der Lösungsmittelextraktion während der hydrometallurgischen Gewinnung eines Metalls, wie sie in Figur 1 dargestellt ist, gebildet wird.

Besonders bevorzugt wird zur Aufarbeitung der Emulsion ein Dekanter, insbesondere ein Dreiphasen-Dekanter, verwendet.

Bei dem in Figur 2 dargestellten Dreiphasen-Dekanter 1 wird aufzuarbeitende Emulsion 2 über ein Zuleitungsrohr 4 in einen Trommelinnenraum 3 einer Trommel 16 geleitet.

Diese Emulsion 2 wird im Zentrifugalfeld der Trommel 16 des Dekanters 1 in eine organische Phase 5, eine wässrige Phase 6 und eine Feststoffphase 7 getrennt. Es bilden sich ein Trennzonendurchmesser T und eine Teichtiefe bzw. ein Teichtiefendurchmesser T_{D} aus.

Die organische Phase 5 wird über eine Schälscheibe 8 mit Schälscheibenschaft und eine diesem in Ablaufrichtung nachgeordnete Ablaufleitung 9 mittels einer nicht-dargestellten Pumpe aus dem Dekanter 1 abgeführt.

Die schwerere wässrige Phase 6 wird hier beispielhaft radial an einem Auslass 19 aus dem Dekanterinnenraum 3 ausgetragen, im Sammelraum 10 aufgefangen und von dort aus dem Dekanter abgeleitet.

Die Feststoffphase 7 wird vorzugsweise mit einer Schnecke 17 auf eine dem Ablauf der organischen Phase 5 entgegengesetzte Seite der Trommel 16 geleitet und dort aus der Trommel 16 gefördert (nicht dargestellt).

Im Trommelinnenraum 3 ist hier ein Wehr 11 angeordnet, über welches die organische Phase 5 zur Schälscheibe 8 fließt.

Das Wehr 18 dient dagegen als Ableitungsüberlauf für die wässrige Phase 7 zum hier bevorzugten radialen Auslass aus der Trommel 16.

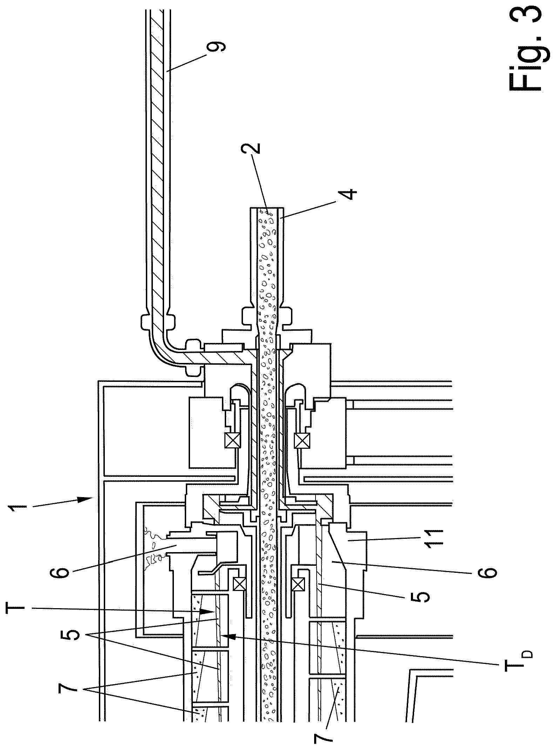

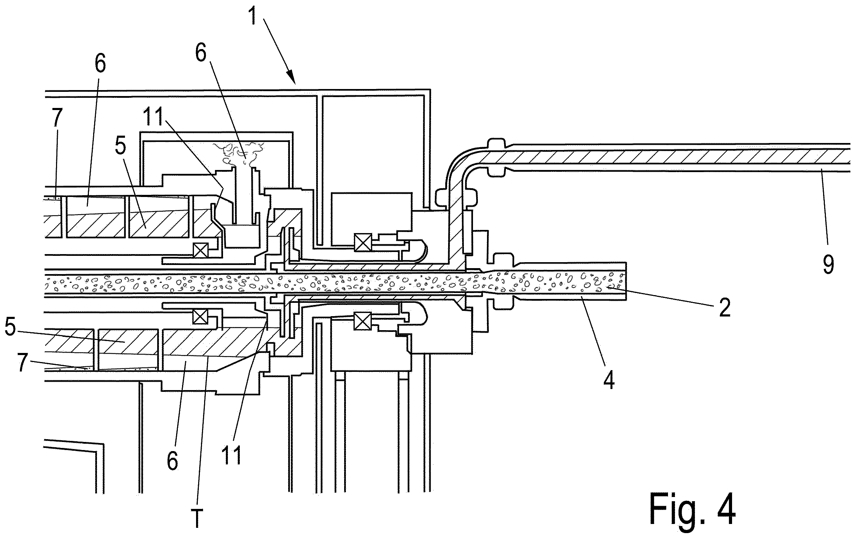

Zur Einstellung der Trennzone bzw. des Trennzonendurchmessers T (siehe auch Fig. 3 und 4) im Dekanter 1 wird ein in die Ablaufleitung 9 geschaltetes Ventil 12 geschaltet, welches über einer Regeleinrichtung 13 zur Einstellung des Ventils 12 in Abhängigkeit von einer Prozessgröße, insbesondere in Abhängigkeit vom Druck der organischen Phase ansteuerbar ist.

Diese Regeleinrichtung 13 weist zumindest ein Mittel zur Ermittlung einer Prozessgröße auf. Ein bevorzugtes Mittel zur Ermittlung der Prozessgröße ist ein Mittel zur Dichtemessung 14, nämlich der Dichte der organischen Phase 5.

Weicht die Dichte von einer Führungsgröße (vorzugsweise ein fester oder variabler Dichtesollwert, welcher eine nicht zu überschreitende Kontamination der organischen Phase 5 wiederspiegelt) bzw. einem hiermit zusammenhängenden jeweiligen Sollwert der Dichte ab, so erfolgt eine entsprechende Änderung des Androsselns des Ventils 12.

Durch ein verstärktes Androsseln des Ventils 12 wird weniger leichte Phase 5 abgeleitet, wodurch der Durchmesser der Trennzone T in der Trommel 16 des Dekanters nach außen verschoben wird, wobei zugleich eine Erhöhung der Teichtiefe D_{T} radial nach innen hin bewirkt wird.

Die mit der Einstellung des Ventils 12 verbundene Einstellung des Ablaufdruckes bewirkt eine Verschiebung der Trennzone T im Dekanter in Abhängigkeit von der Dichte der organischen Phase. Ein Anstieg der Dichte der organischen Phase ist gleichbedeutend mit einem Anstieg an Kontaminationen in dieser Phase. Durch die Ermittlung der Dichte können Kontaminationen in der organischen Phase 5 auf einfache Weise detektiert werden. Ein fester oder variabler Sollwert für die Dichte bildet die Obergrenze für mögliche Kontaminationen. Wird dieser überschritten, so werden Gegenmaßnahmen - das Verändern des Ablaufdrucks in der Ablaufleitung 9 - zur Verringerung der Dichte eingeleitet. Die Ermittlung der Dichte erlaubt somit eine automatische Anpassung der Arbeitsweise des Dekanters im kontinuierlichen Betrieb.

Figur 3 zeigt einen möglichen Zustand des Dekanters 1, bei dem das hier nicht dargestellte Ventil 12 nicht oder nur sehr wenig angedrosselt worden ist. In diesem Zustand liegt die organische Phase nur in sehr geringer Menge vor.

Steigt die Kontamination der wertvollen organischen Phase an, kann diese erhöhte Kontamination kann durch das in Figur 2 dargestellte Mittel zur Dichtemessung 14 z.B. in der Ablaufleitung 9 ermittelt werden und anschließend ein Androsseln des Ventils 12 zur Erhöhung des Ablaufdruckes erfolgen. Der erhöhte Ablaufdruck verschiebt die Trennzone T nach außen, so dass sich weniger Feststoffe im Bereich des Ablaufes der organischen und der wässrigen Phase befinden. Zudem verschiebt sich der Teichzonendurchmesser T_{D} radial nach innen. Figur 4 zeigt diesen den Zustand des Dekanters 1 bei im Vergleich zu Figur 3 stärker angedrosseltem Druckventil 12, bei welchem der Ablaufdruck erhöht ist, was die Trennzone T weiter nach außen verschiebt und die Teichtiefe T_{D} nach innen.

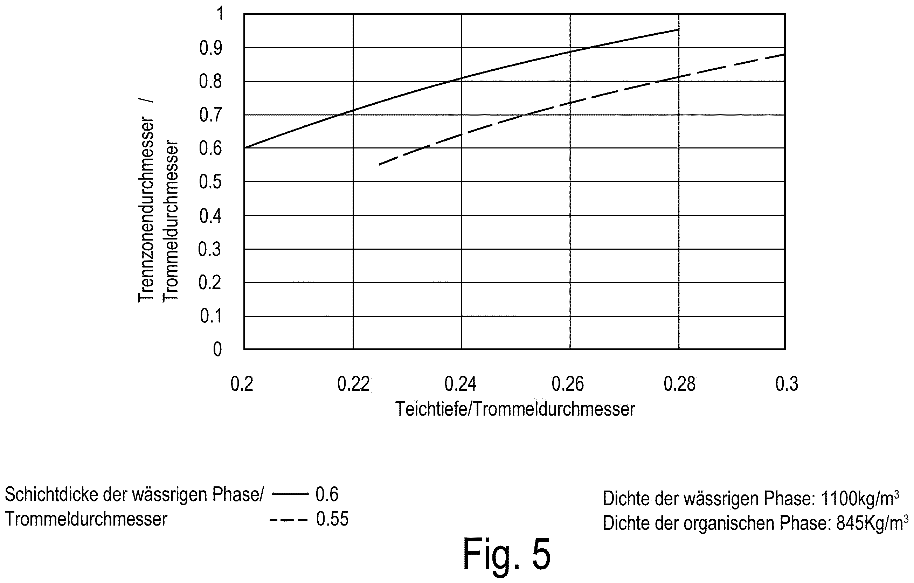

Im Diagramm der Figur 5 ist schematisch die Abhängigkeit des Quotienten Trennzonendurchmesser T/Trommeldurchmesser gegen den Quotienten Teichtiefe Td /Trommeldurchmesser dargestellt.

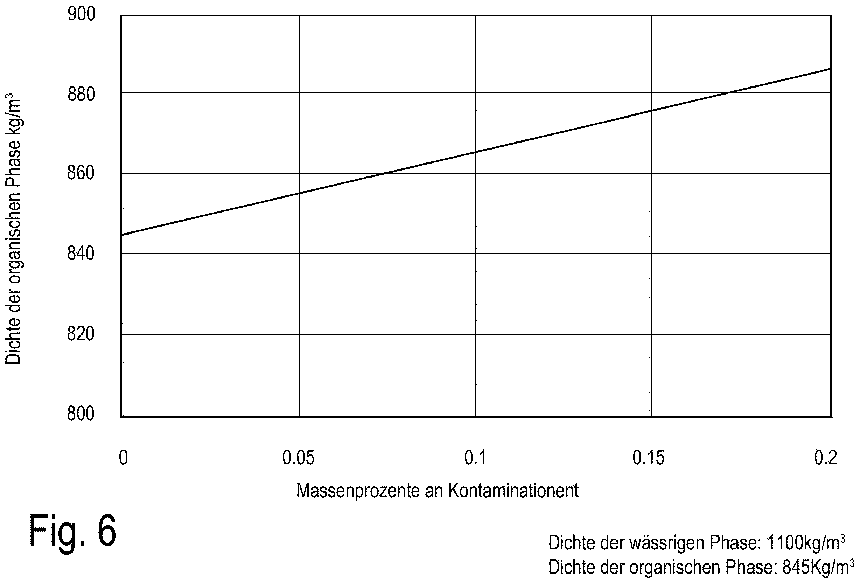

Das Diagramm in Figur 6 beschreibt die Abhängigkeit der Dichte der kontaminierten organischen Phase in Abhängigkeit von dem Kontaminationsgrad.

Eine reine organische Phase weist eine Dichte von 845 kg/m³ auf. Diese Dichte steigt allerdings mit zunehmender Kontamination weiter vorzugsweise linear an. Daher ist ein direkter Rückschluss auf die gegebene Kontamination durch die Ermittlung der Dichte der organischen Phase möglich.

Ein derartiges Diagramm wird im Versuch ermittelt. Im Versuch wird weiter ermittelt, welcher Ablaufdruck bei welcher Kontamination besonders vorteilhaft ist. Ein derartiger Zusammenhang kann dann im Rechner gespeichert und zur Ermittlung des einzustellenden Ablaufdrucks herangezogen werden.

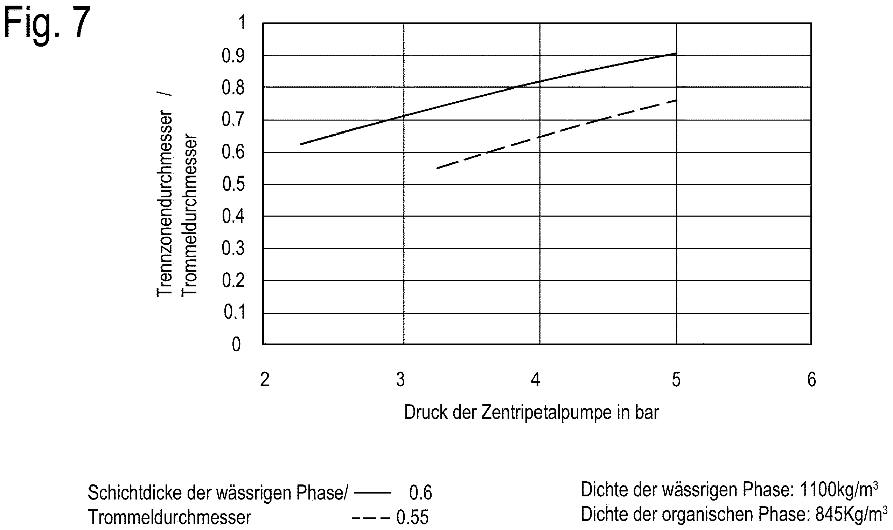

So wird im Diagramm der Figur 7 die Abhängigkeit des Trennzonendurchmessers zum Trommeldurchmesser T vom Druck an der Schälscheibe bzw. Zentripetalpumpe infolge der Drosselung des Ventils 12 dargestellt.

Dabei erkennt man, dass bei zunehmenden Druck durch die Pumpe der Trennzonendurchmesser T nach außen hin ansteigt. Dem Anstieg des Trennzonendurchmessers T entspricht ein Anstieg des Volumens an organischer Phase in der Trommel und damit ein Anstieg der Retentionszeit, also der Zeit, welche die organische Phase zum Durchlaufen des Dekanter benötigt.

Damit bewirkt die Erhöhung des Trennzonendurchmessers T auch eine höhere Reinheit der organischen Phase. Die Anpassung des Ablaufdruckes und damit verbunden des Trennzonendurchmessers T in Abhängigkeit von der ermittelten Dichte der organischen Phase kann im kontinuierlichen Prozessablauf in Echtzeit erfolgen.

Sofern der Ablaufdruck allerdings zu stark ansteigt, beispielsweise durch starke Verringerung des Ablaufvolumens der organischen Phase, erhält man zwar eine organische Phase mit hoher Reinheit, allerdings geht in diesem Fall ein Teil der organischen Phase beim Austrag der wässrigen Phase verloren. Teilweise werden auf diese Weise auch Feststoffe verloren. In diesem Fall kann eine zusätzliche Ermittlung und Einstellung der Ausbeute, der Leitfähigkeit und des Reinheitsgrades der organischen Phase oder ggf. auch der wässrigen Phase erfolgen. Die Ausbeute kann beispielsweise mit Mitteln zur Messung des Volumenstromes 15 bestimmt werden, welche wie in Fig.2 dargestellt im Bereich des Ablaufs der organischen Phase angeordnet sind.

Anzumerken ist, dass geeignete Mittel zur Dichtemessung dem Fachmann bekannt sind. Zu erwähnen sind optische Methoden (Durchleuchten der Phase: mit zunehmender Trübheit nimmt die Dichte zu). Darüber hinaus sind andere geeignete Mittel zur Dichtemessung verwendbar. Vorzugsweise wird die Dichtemessung kontinuierlich - beispielsweise im aus der Ablaufleitung 9 austretenden Produkt - vorgenommen.

Die Versuche wurden mit einer Dekanterzentrifuge Typ DCE 345-02.32 der GEA WESTFALIA GROUP GMBH, Oelde, Deutschland durchgeführt.

**Bezugszeichen**
- 1: Dekanter
- 2: Emulsion
- 3: Dekanterinnenraum
- 4: Zuleitungsrohr
- 5: Organische Phase
- 6: Wässrige Phase
- 7: Feststoffphase
- 8: Schälscheibe
- 9: Ablaufleitung
- 10: Sammelraum
- 11: Wehr
- 12: Ventil
- 13: Regler
- 14: Mittel zur Dichtemessung
- 15: Mittel zur Messung des Volumenstromes
- 16: Trommel
- 17: Schnecke
- 18: Überlaufwehr
- 19: Auslass

- Schritt A: Bereitstellen von Metallerz
- Schritt B: Auslaugen
- Schritt C: Lösungsmittelextraktion
- Schritt D: Rückextraktion
- Schritt E: elektrochemische Gewinnung
- Schritt F: Aufarbeitung der Emulsion
- M: Metall
- T: Trennzone
- T_{d}: Teichtiefe

## Patentansprüche

1. Verfahren zur zentrifugalen Aufarbeitung einer bei der hydrometallurgischen Gewinnung eines Metalls gebildeten feststoffhaltigen Emulsion, wobei die Aufarbeitung der Emulsion in einem Dreiphasen-Dekanter erfolgt, und zwar unter Bildung einer ersten leichteren flüssigen Phase (5), einer zweiten flüssigen Phase (6) und einer Feststoffphase (7), wobei die erste flüssige Phase (5) eine geringere Dichte aufweist als die zweite flüssige Phase (6), **gekennzeichnet durch** die folgenden Schritte:
i) Ermitteln eines Istwerts der Dichte der ersten flüssigen Phase (5),
ii) Vergleichen des Istwerts mit einer Führungsgröße, insbesondere einem Dichtesollwert, und
iii) Einstellen des Ablaufdruckes der ersten flüssigen Phase in Abhängigkeit von der Führungsgröße.

2. Verfahren nach Anspruch 1, **dadurch gekennzeichnet, dass**, wobei das Einstellen des Ablaufdrucks durch Androsseln eines Ventils (12) in einer einer Schälscheibe (8) nachgeschalteten Ablaufleitung (9) zur Ableitung der ersten flüssigen Phase (5) aus dem Dekanter erfolgt.

3. Verfahren nach einem der vorhergehenden Ansprüche, **dadurch gekennzeichnet, dass** die Aufarbeitung unter Bildung einer organischen Phase (5), einer wässrigen Phase (6) und einer Feststoffphase (7) erfolgt, wobei es sich bei der organischen Phase (5) um die erste flüssige Phase und bei der wässrigen Phase (6) um die zweite flüssige Phase handelt.

4. Verfahren nach einem der vorhergehenden Ansprüche, **dadurch gekennzeichnet, dass** zusätzlich zur Dichte eine weitere Regelgröße ermittelt und bei der Einstellung des Ablaufdrucks berücksichtigt wird.

5. Verfahren nach Anspruch 4 **dadurch gekennzeichnet, dass** als zusätzliche Regelgröße die Ausbeute, die Leitfähigkeit und/oder der Reinheitsgrades der ersten flüssigen Phase (5) und/oder der zweiten flüssigen Phase (6) verwandt wird.

## Claims

1. A process for the centrifugal work-up of a solids-containing emulsion formed in the hydrometallurgical winning of a metal, wherein the work-up of the emulsion is carried out in a three-phase decanter, namely to form a first lighter liquid phase (5), a second liquid phase (6) and a solids phase (7), wherein the first liquid phase (5) has a lower density than the second liquid phase (6),
**characterized by** the following steps:
i) determination of an actual value of the density of the first liquid phase (5),
ii) comparison of the actual value with a guide parameter, in particular a prescribed density value, and
iii) setting of the outflow pressure of the first liquid phase as a function of the guide parameter.

2. The process as claimed in claim 1, **characterized in that** the setting of the outflow pressure is effected by throttling of a valve (12) in an outflow line (9) downstream of a peeling plate (8) for discharging the first liquid phase (5) from the decanter.

3. The process as claimed in any of the preceding claims, **characterized in that** the work-up is carried out with formation of an organic phase (5), an aqueous phase (6) and a solids phase (7), wherein the organic phase (5) is the first liquid phase and the aqueous phase (6) is the second liquid phase.

4. The process as claimed in any of the preceding claims, **characterized in that** a further regulating parameter is determined in addition to the density and is taken into account in the setting of the outflow pressure.

5. The process as claimed in claim 4, **characterized in that** the yield, the conductivity and/or the purity of the first liquid phase (5) and/or the second liquid phase (6) is employed as additional regulating parameter.

## Revendications

1. Procédé pour le traitement par centrifugation d'une émulsion contenant des solides formée lors de l'extraction hydrométallurgique d'un métal, dans lequel le traitement de l'émulsion a lieu dans un décanteur à trois phases, avec formation d'une phase liquide légère (5), d'une deuxième phase liquide (6) et d'une phase solide (7), la première phase liquide (5) ayant une densité inférieure à celle de la deuxième phase liquide (6), **caractérisé en ce qu'**il comprend les étapes suivantes :
i) détermination d'une valeur réelle de densité de la première phase liquide (5),
ii) comparaison de la valeur réelle à une grandeur de référence, en particulier une valeur de consigne de densité, et
iii) ajustement de la pression d'écoulement de la première phase liquide en fonction de la grandeur de référence.

2. Procédé selon la revendication 1, **caractérisé en ce que** le réglage de la pression d'écoulement est effectué par étranglement avec une vanne (12) dans une conduite d'écoulement (9) disposée en aval d'un disque racleur (8) pour l'écoulement de la première phase liquide (5) hors du décanteur.

3. Procédé selon l'une des revendications précédentes, **caractérisé en ce que** le traitement est effectué en formant une phase organique (5), une phase aqueuse (6) et une phase solide (7), la phase organique (5) constituant la première phase liquide et la phase aqueuse (6) la deuxième phase liquide.

4. Procédé selon l'une des revendications précédentes, **caractérisé en ce qu'**outre la densité, une autre grandeur de régulation est déterminée et prise en compte lors du réglage de la pression d'écoulement.

5. Procédé selon la revendication 4, **caractérisé en ce que** la grandeur de régulation supplémentaire utilisée est le rendement, la conductivité et/ou le degré de pureté de la première phase liquide (5) et/ou de la deuxième phase liquide (6).
